Europäisches Patentamt

(19) European Patent Office

Office européen des brevets

(11) Numéro de publication : **0 321 330 B1**

# (12) FASCICULE DE BREVET EUROPEEN

(45) Date de publication du fascicule du brevet :
10.07.91 Bulletin 91/28

(51) Int. Cl.⁵ : **B62D 25/08, B60S 1/50**

(21) Numéro de dépôt : **88403157.6**

(22) Date de dépôt : **13.12.88**

(54) Traverse d'auvent pour véhicules.

(30) Priorité : **16.12.87 FR 8718190**

(43) Date de publication de la demande :
**21.06.89 Bulletin 89/25**

(45) Mention de la délivrance du brevet :
**10.07.91 Bulletin 91/28**

(84) Etats contractants désignés :
**DE GB IT**

(56) Documents cités :
**DE-A- 3 119 572
DE-A- 3 316 825
PATENT ABSTRACTS OF JAPAN, vol. 10, no.
134 (M-479)[2191], 17 mai 1986, page 123 M
479; & JP-A-60 259 578 (KINUGAWA GOMU
KOGYO K.K.) 21-12-1985**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Dossin, Jacques
4, Rue de l'Alma
F-92400 Courbevoie (FR)**

(74) Mandataire : **Boivin, Claude
9, rue Edouard-Charton
F-78000 Versailles (FR)**

## Description

Le caisson d'auvent d'un véhicule automobile, c'est-à-dire l'espace compris entre le moteur et le bas du pare-brise, nécessite la présence d'une paroi étanche au bruit et à l'air du côté du compartiment moteur; cette paroi est dénommée traverse d'auvent.

Il est connu par le document DE-A-3 119 572 de constituer cette traverse d'auvent par un corps creux en matière plastique à laquelle peuvent être intégrées diverses unités auxiliaires du véhicule.

La présente invention a pour objet une traverse d'auvent qui simplifie la réalisation du lave-glaces.

Cette traverse d'auvent est caractérisée en ce qu'elle comporte une cavité étanche qui forme bocal réservoir de lave-glaces et est séparée du reste du volume creux par pincement de ses parois.

Ce corps creux est de préférence réalisé par extrusion soufflage, procédé qui facilite l'intégration de la cavité étanche.

Le volume nécessaire à la cavité étanche est inférieur à celui de la traverse. Aussi, l'intérieur de la traverse peut comporter des volumes autres que la cavité étanche et dont tous ou certains au moins contiennent une mousse.

On a décrit ci-après, à titre d'exemple non limitatif, un mode de réalisation de la traverse d'auvent selon l'invention, avec référence au dessin annexé dans lequel :

La Figure 1 est une vue en perspective de la traverse,

Les Figures 2 à 4 en sont des coupes transversales respectivement suivant II-II, III-III et IV-IV de la Figure 1.

Au dessin, on voit en 1 la traverse d'auvent d'un véhicule automobile, qui est constituée par un corps creux, disposée entre le moteur et la base du pare-brise. Cette traverse est en matière plastique et obtenue par exemple par extrusion soufflage. Elle est fixée au tablier 2 du véhicule par des boulons 3 ; un joint 4 assure l'étanchéité entre elle et le capot 5 alors qu'un cordon 6 assure son étanchéité avec le compartiment moteur.

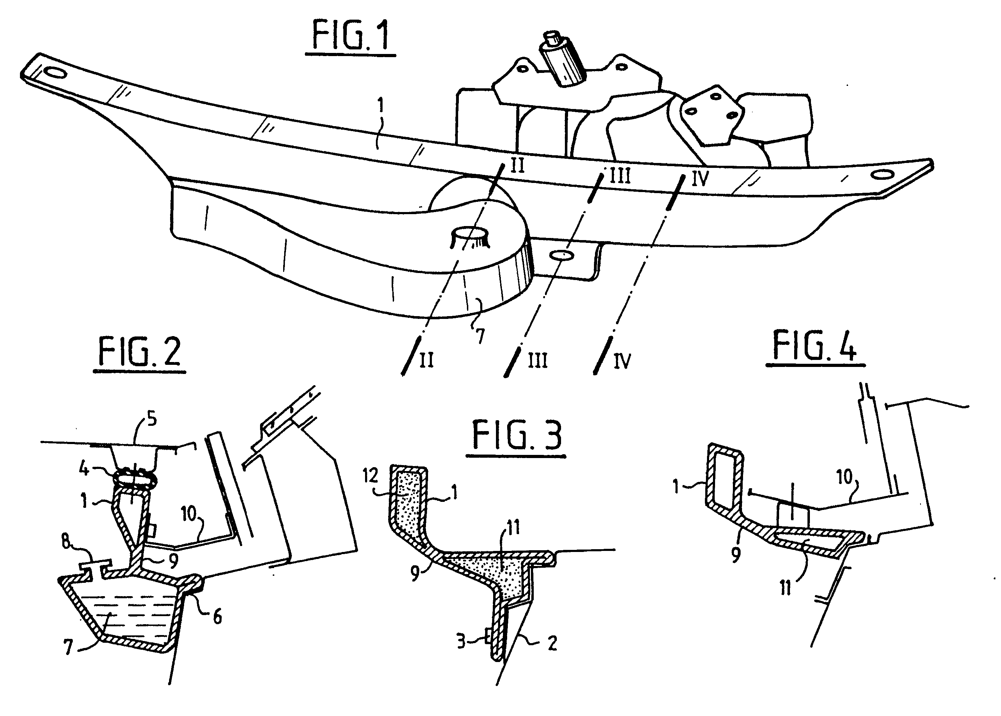

La traverse 1 comprend une cavité étanche 7 qui présente une ouverture de remplissage 8 et est séparée, par un pincement 9 de ses parois, du reste du volume creux de la traverse. Cette cavité 7 constitue un bocal réservoir du liquide lave-vitre et est reliée par des conduits à une pompe et à des gicleurs non représentés. La traverse 1 présente, sous l'auge d'auvent 10, une deuxième cavité 11 qui peut contenir une mousse pour assurer un amortissement acoustique ; l'intérieur de la traverse peut également contenir une telle mousse, sur tout ou partie de la longueur, comme indiqué en 12 à la Figure 3.

La cavité 7 est à proximité des gicleurs de sorte que les connexions à ces organes sont simples. Elle bénéficie des calories de rayonnement du moteur, ce qui empêche le liquide de geler lors d'une basse température climatique. La traverse peut jouer le rôle de platine de pré-montage pour le mécanisme de lave-glaces et d'essuie-glaces ; par sa double paroi, elle assure une bonne ventilation phonique entre le compartiment moteur et le caisson d'auvent.

## Revendications

1. Traverse d'auvent pour véhicules constituée par un corps creux en matière plastique, caractérisée en ce qu'elle comporte une cavité étanche (7) qui forme bocal réservoir de lave-glaces et est séparée du reste du volume creux par pincement (9) de ses parois.

2. Traverse d'auvent selon la revendication 1, caractérisée en ce qu'elle est réalisée par extrusion soufflage.

3. Traverse d'auvent selon la revendication 1 ou 2, caractérisée en ce que son espace intérieur comprend des volumes (11 ou 12) autres que la cavité étanche (7) et dont tous ou certains au moins contiennent une mousse.

4. Traverse d'auvent selon l'une des revendications 1 à 3, caractérisée en ce qu'elle sert de support au mécanisme de lave-glaces et d'essuie-glaces.

## Ansprüche

1. Querträger einer Trennwand für Fahrzeuge, der als Hohlkörper aus Kunststoff ausgebildet ist, **dadurch gekennzeichnet**, daß er einen abgedichteten Hohlraum (7) umfaßt, der einen gläsernen Behälter für die Scheibenwaschanlage bildet und vom übrigen Hohlraum durch eine Zusammenquetschung (9) seiner Wandungen abgetrennt ist.

2. Querträger nach Anspruch 1, **dadurch gekennzeichnet**, daß er durch Extrusionsblasen hergestellt ist.

3. Querträger nach Anspruch 1 oder 2, **dadurch gekennzeichnet**, daß er in seinem inneren Bereich andersartige Hohlräume (11 oder 12) als der abgedichtete Hohlraum (7) aufweist, welche alle oder wenigstens bestimmte Hohlräume Schaumstoff enthalten.

4. Querträger nach einem der Ansprüche 1 bis 3, **dadurch gekennzeichnet**, daß er als Träger für den Wasch-Wischanlage-Mechanismus dient.

## Claims

1. Cowl passage for vehicles and constituted by a hollow plastic body, wherein it comprises a sealed cavity forming a windshield washer tank bottle and is separated from the remainder of the hollow volume by the toeing-in (9) of its walls.

2. Cowl passage according to claim 1, wherein it is embodied by extrusion blow-moulding.

3. Cowl passage according to claim 1 or 2, wherein its internal space includes volumes (11 or 12) other than the sealed cavity (7), all or some of these volumes containing at least one foam element.

4. Cowl passage according to any one of claims 1 to 3, wherein its is used to support the windshield washer and windshield wiper mechanism.

FIG.1

FIG.2

FIG.3

FIG.4

EP 0 321 330 B1